(19) Europäisches Patentamt
European Patent Office
Office européen des brevets

(11) Publication number: **0 044 174**
**A1**

(12) # EUROPEAN PATENT APPLICATION

(21) Application number: 81303011.1

(22) Date of filing: 01.07.81

(51) Int. Cl.³: C 08 G 18/10
C 08 G 18/32, C 08 G 18/66
C 08 L 75/02, C 08 L 75/04

(30) Priority: 11.07.80 US 168898

(43) Date of publication of application: 20.01.82 Bulletin 82/3

(84) Designated Contracting States: BE DE FR GB IT

(71) Applicant: TEXACO DEVELOPMENT CORPORATION
2000 Westchester Avenue
White Plains New York 10650(US)

(72) Inventor: Cuscurida, Michael
2202 North Loop Apt. 239
Austin Texas 78756(US)

(72) Inventor: Speranza, George Philip
2800 Silverleaf Circle
Austin Texas 78757(US)

(74) Representative: Brock, Peter William
Michael Burnside & Partners 2 Serjeants' Inn Fleet Street
London EC4Y 1HL(GB)

(54) **Polyurea polymer polyol and its use in producing polyurethanes.**

(57) Polyurethane polymer polyols can be prepared by reacting a hydroxyl-containing amine (e.g. ethanol-amine), a polyetherpolyol having a molecular weight of 2000 to 8000, and a less than stoichiometric amount of an organic polyisocyanate. The molar ratio of hydroxyl-containing amine to polyether polyol is from 0.5:1 to 3.5:1. The molar ratio of active hydrogen (in hydroxyl-containing amine and polyol) to isocyanate is from 1.4:1 to 3.5:1.

In a preferred embodiment, the stability of the polyurethane polymer polyols is enhanced by adding a secondary amine.

Polyurethane foams obtained by reacting the polyurethane polymer polyols with more polyisocyanate have generally better properties (e.g. tensile and tear strength, elongation and compression) than foams produced directly from hydroxyl-containing amine, polyether polyol and a stoichiometric amount of polyisocyanate.

EP 0 044 174 A1

# POLYUREA POLYMER POLYOL AND ITS USE IN PRODUCING POLYURETHANES

This invention relates to the field of polyurethane plastics.

The use of a polyol in the preparation of polyurethanes by reaction of the polyol with a polyisocyanate in the presence of a catalyst, and optionally other ingredients, is well known. Conventional polyols for flexible polyurethane foams are usually made by the reaction of a polyhydric alcohol with an alkylene oxide, usually ethylene oxide and/or propylene oxide, to a molecular weight of 2000 to 3000 or even higher. These polyols are then reacted with polyisocyanate in the presence of water, or other blowing agents such as fluorocarbons, to obtain polyurethane foams. The prior art describes modified polyols in which vinyl monomers, such as styrene or acrylonitrile, or other materials, such as hydrazine hydrate, have been included to improve the properties of the polyol and those of the resulting foam. Some of these prior art materials are however, highly toxic and require in addition, stripping of unreacted vinyl monomers or water of hydration. U.S. Patent No. 4,107,102 describes the manufacture of polyurethane foam using a polyol containing hydrazine and its adducts.

German Offenlegungsschrift No. 2,110,055 discloses a one-shot process for making a polyurethane product in which a hydroxyl-containing amine is included in the formulation. That is, the hydroxyl-containing amine is simply included initially with the polyol and the polyisocyanate and a polyurethane product results. The German process does not use a polyurea polymer polyol which is then reacted with a polyisocyanate. The present invention makes improved polyurethane foams over the process of the German patent as will be made clear by the disclosure and the examples which follow.

U.S. patent No. 3,325,421 discloses a method of making a stable dispersion of a urea in a composition comprising an organic polyisocyanate, a diamine and a compound having at least two alcoholic hydroxyl groups.

The present invention provides a polyurea polymer polyol characterized in that it is the reaction of a hydroxyl-containing amine, a polyether polyol having a molecular weight of 2000 to 8000, and an organic polyisocyanate, the molar ratio of hydroxyl containing amine to polyether polyol being from 0.5:1 to 3.5:1, and the molar ratio of active hydrogen to isocyanate groups being from 1.4:1 to 3.5:1.

The present invention also provides a method for producing a polyurethane which comprises first making a polyurea polymer polyol as described above, and then reacting the polyurea polymer polyol with an organic polyisocyanate. In one embodiment the polyurea polymer polyol is stabilized by means of a secondary amine.

The polyurea polymer polyol is made by the reaction of a hydroxyl-containing amine, a polyether polyol and an organic polyisocyanate. The hydroxyl-containing amine preferably has a molecular weight from 60 to 200, most preferably from 60 to 150 and is exemplified by the following typical compounds: monoethanolamine, diethanolamine, 2-(2-aminoethoxyethanol), hydroxyethylpiperazine, N-methylethanolamine 2-hydroxyethylethylenediamine or 1-amino-2-propanol.

The polyether polyol which is used has a hydroxyl number preferably between 20 and 60. The polyol is generally an alkylene oxide adduct of a polyhydric alcohol with a functionality of from 2 to 4, preferably a trihydric alcohol. The alkylene oxide may suitably be ethylene oxide, propylene oxide, or 1,2-butylene oxide or a mixture of some or all of these. The polyol has a molecular weight within the range of from 2,000 to 8,000, and more preferably from 3,000 to 8,000.

The alkylene oxide is preferably propylene oxide or a mixture of propylene oxide and ethylene oxide.

The molar ratio of hydroxyl containing amine to polyether polyol is from 0.5:1 to 3.5:1, preferably from 0.7:1 to 2.8:1.

The polyisocyanate may be any aromatic or aliphatic polyisocyanate. Typical aromatic polyisocyanates include m-phenylene diisocyanate, p-phenylene diisocyanate, polymethylene polyphenyl polyisocyanates, 2,4-toluene diisocyanate, 2,6-tolulene diisocyanate, dianisidine diisocyanate, bitolylene diisocyanate, naphthalene-1,4-diisocyanate, xylylene-1,4-diisocyanate, xylylene-1,3-diisocyanate, bis(4-isocyanatophenyl)methane, bis-(3-methyl-4-isocyanateophenyl)methane, and 4,4'-diphenylpropane diisocyanate and mixtures thereof.

Greatly preferred aromatic polyisocyanates used in the practice of the invention are 2,4- and 2,6-toluene diisocyanates and methylene-bridged polyphenyl polyisocyanate mixtures which have a functionality of from 2 to 4. These latter isocyanate compounds are generally produced by the phosgenation of corresponding methylene-bridged polyphenyl polyamines, which are conventionally produced by the reaction of formaldehyde and primary aromatic amines, such as aniline, in the presence of hydrochloric acid and/or other acidic catalysts. Known processes for preparing polyamines and corresponding methylene-bridged polyphenyl polyisocyanates therefrom are described in the literature and in many patents, for example, U.S. Patents No. 2,683,730; 2,950,263; 3,012,008; 3,344,162 and 3,362,979.

The most preferred methylene-bridged polyphenyl polyisocyanate mixtures for use herein contain 20 to 100 weight percent of methylene diphenyldiisocyanate isomers, with any remainder being polymethylene polyphenyl polyisocyanates having higher functionalities and higher molecular weights. Typical of these are polyphenyl polyisocyanate mixtures containing 20 to 100 weight percent methylene diphenyldiisocyanate isomers, of which 20 to 95 weight percent thereof is the 4,4'-isomer, with the remainder being polymethylene polyphenyl polyisocyanates of higher molecular weight and functionality that have an average functionality of from 2.1 to 3.5. These isocyanate mixtures are known, commercially available materials and can be prepared by the process described in U.S. Patent No. 3,362,979.

Since the polyurea polymer polyol has by definition free hydroxyl groups, the amount of polyisocyanate used to form the polyurea polymer polyol is less than the stoichiometric amount needed to satisfy the active hydrogens of the hydroxyl groups of the polyether polyol and the hydroxyl containing amine and the active amine hydrogens. The molar ratio of active hydrogen (from hydroxyl and amine) to isocyanate groups should range from 1.4:1 to 3.5:1 and preferably from 1.6:1 to 3.3:1.

The polyether polyol, hydroxyl containing amine and polyisocyanate can be successfully reacted without application of external heat and atmospheric pressure although higher temperatures and pressures would also be acceptable.

The polyurea polymer polyol prepared from the above ingredients is then incorporated into a formulation which results in a polyurethane product. The polyurea polymer polyol may be used in conjunction with a polyisocyanate such as those mentioned above, or may be combined with additional polyol, such as those mentioned above, and reacted with a polyisocyanate to form a resulting polyurethane foam product.

In accordance with the one embodiment of the invention, the storage stability of the polyurea polymer polyol prepared as described above, is enhanced by means of a secondary amine, preferably added in amounts from 0.1 to 1.0 wt. %,. A preferred class of secondary amine has the formula:

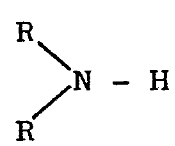

where R is $C_1$ to $C_8$ alkyl. Particularly preferred secondary amines are those where R is $C_4$ to $C_8$, e.g. dibutylamine. Also preferred is morpholine. The amount of amine to be used is not critical but up to 2.0 weight %, preferably 0.1 to 1.0 weight % based on the weight of reactants, is useful. Other amounts may be used if put under conditions as circumstance warrants. Generally this amine is added at the end of reaction between the hydroxyl-containing amine, polyol and polyisocyanate.

The advantage of the method of this invention is in the preparation of the polyurea polymer polyol as a separate entity before incorporating it into a formulation for the preparation of a polyurethane foam product. German Offenlegungsschrift No. 2,110,055 mentioned above, describes a process where a hydroxyl containing amine is incorporated directly in a polyurethane formulation, without first making a polyurea polymer polyol as has been done according to this invention. As the data in Examples X and XI herein will show, the properties of the resulting foam made from such a one-shot method are inferior to the foam made according to this invention, using the previously prepared polyurea polymer polyol.

In order to form the polyurethane foam, a catalyst as conventionally used in preparing polyurethane foams is employed in the usual manner. Such catalyst may include one or more of the following:

(a) Tertiary amines such as trimethylamine, triethylamine, N-methylmorpholine, N-ethylmorpholine, N,N-dimethylbenzylamine, N,N-dimethylethanolamine, N,N,N',N'-tetramethyl-1,3-butanediamine, N,N-dimethylpiperazine, or 1,4-diazabicyclo[2.2.2]octane;

(b) Tertiary phosphines such as trialkylphosphines or dialkylbenzylphosphines;

(c) Strong bases such as alkali metal and alkaline earth metal hydroxides, alkoxides, and phenoxides;

(d) Acidic metal salts of strong acids

such as ferric chloride, stannic chloride, stannous chloride, antimony trichloride, bismuth nitrate and chloride;

(e) Chelates of various metals, such as those which can be obtained from acetylacetone, benzoylacetone, trifluoroacetyl acetone, ethyl acetoacetate, salicyaldehyde, cyclopentanone-1-carboxylate, acetyl-acetoneimine, bis-acetylacetonealkylenediamines, or salicyclaldehydeimine, with various metals such as Be, Mg, Zn, Cd, Pd, Ti, Zr, Sn, As, Bi, Cr, Mo, Mn, Fe, Co, and Ni;

(f) Alcoholates and phenolates of various metals such as $Ti(OR)_4$, , $Sn(OR)_4$, , or $Al(OR)_3$, , wherein R is alkyl or aryl, and the reaction products of alcoholates with carboxylic acids, beta-diketones, and 2-(N,N-dialkylaminc)alkanols;

(g) Salts of organic acids with a variety of metals such as alkali metals, alkaline earth metals, Al, Sn, Pb, Mn, Co, Ni, and Cu, including, for example, sodium acetate, stannous octoate, stannous oleate, lead octoate, and metallic driers such as manganese and cobalt naphthenate; and

(h) Organometallic derivatives of tetravalent tin, trivalent and pentavalent As, Sb, and Bi, and metal carbonyls of iron and cobalt.

Of course combinations of any of the above polyurethane catalysts may be employed. Usually the amount of catalyst employed is from 0.01 to 5.0 % by weight based on the polyol. More often the amount of catalyst used is 0.2 to 2.0 % by weight.

Foaming is carried out in the presence of water and, optionally, additional organic blowing agents. The water is normally used in amounts of 0.5 to 15 % by weight, preferably, 1.0 to 10 % by weight, based on the polyurea polymer polyol and any additional polyol present. The organic blowing agents optionally used along with the water are known in the art and

are, for example, monofluorotrichloromethane, difluorodichloromethane, methylene dichloride and others generally known in the art.

Additives to regulate the cell size and the cell structure, for example, silicone oils, such as dimethylpolysiloxanes may also be added to the foaming mixture. Fillers, flame retarding additives, dyes or plasticizers of known types may also be used. These and other additives are well known to those skilled in the art.

The invention and its improvement over the art will now be illustrated with the aid of the following Examples. These Examples are intended to illustrate the invention but are not intended to delineate the expected scope of the invention.

EXAMPLE I

Into a one-liter three-necked flask equipped with a stirrer, thermometer, nitrogen source, and dropping funnel were charged 400g THANOL SF-5505* (0.072 moles) and 21g 2-(2-aminoethoxy)ethanol (DIGLYCOLAMINE) (0.2 moles). Toluene diisocyanate (TDI, 17.4g) was then added dropwise over a 30-minute period. The temperature of the reactants rose from 25-45°C during this period with no external heat applied. After a 1.5 hour digestion period, the reaction was terminated. The resultant product was a white, opaque, viscous liquid with the following properties:

| | |
|---|---|
| Hydroxyl no., mg KOH/g | 53.2 |
| Water, wt% | 0.16 |
| Viscosity, 25°C, cps | 2100 |
| 38°C, cps | 1480 |
| Moles of active hydrogens / Moles of isocyanate groups | 2.7 |

* A 5500 molecular weight polyether triol based on a glycerine initiator containing approximately 80% primary hydroxyl groups. Product of Texaco Chemical Company.

EXAMPLE II

Using the procedure described in Example I, a polyurea polymer polyol was prepared by the dropwise addition of 12g TDI to 18g hydroxyethylpiperazine (0.138 moles) which was dissolved in 400g THANOL SF-6503* polyol (0.062 moles). The resultant product was a white, opaque, viscous liquid with the following properties:

| | |
|---|---|
| Hydroxyl no., mg KOH/g | 57.4 |
| Water, wt% | 0.02 |
| Viscosity, 25°C, cps | 1910 |
| Moles of active hydrogens / Moles of isocyanate groups | 2.9 |

* A 6500 molecular weight polyether triol based on a glycerine initiator containing approximately 90% primary hydroxyl groups. Product of Texaco Chemical Company.

EXAMPLE III

Using the procedure of Example I, a polyurea polymer polyol was prepared by the dropwise addition of 17.4g TDI to 6.1g monoethanolamine (0.1 moles) dissolved in 400g of THANOL SF-6503 (0.062 moles) polyol. After the TDI addition was completed, 1 drop (about 0.02g) dibutyltin dilaurate was added to the reaction mixture to complete the reaction. The resultant product was a white, opaque viscous liquid which had the following properties:

| | |
|---|---|
| Hydroxyl no., mg KOH/g | 28.5 |
| Water, wt% | 0.04 |
| pH in 10:6 i-PrOH-$H_2O$ | 9.3 |
| Viscosity, 25°C, cps | 8850 |
| $\frac{\text{Moles of active hydrogens}}{\text{Moles of isocyanate groups}}$ | 1.62 |

## EXAMPLE IV

Using the procedure of Example I, a polyurea polymer polyol was prepared by the dropwise addition of 15g ISONATE 143L[1] to 10g hydroxyethylpiperazine (0.77 moles) dissolved in 475g THANOL F-3520[2] polyol (0.114 moles). After the ISONATE 143L addition was completed, 1 drop (about 0.02g) dibutyltin dilaurate was added to the reaction mixture to complete the reaction. The resultant product was a white, opaque, viscous liquid which had the following properties:

| | |
|---|---|
| Hydroxyl no., mg KOH/g | 60.2 |
| Water, wt% | 0.05 |
| pH in 10:6 i-PrOH-$H_2O$ | 8.0 |
| Viscosity, 25°C, cps | 2000 |
| $\frac{\text{Moles of active hydrogens}}{\text{Moles of isocyanate groups}}$ | 2.7 |

[1] Pure 4,4'-diphenyl methane diisocyanate (MDI) modified so that it is a liquid at temperatures where MDI crystallizes. Product of the Upjohn Company.

[2] A 3500 molecular weight polyether triol based on a glycerine initiator. Product of Texaco Chemical Company.

EXAMPLE V

This Example will illustrate a scale-up preparation of the polyurea polymer polyols of this invention. Into a 40 litre reactor were charged 17.25 kg of THANOL SF-6503 polyol and 0.39 kg of hydroxyethylpiperazine. The reactor was then evacuated and purged with prepurified nitrogen. TDI (0.52 kg) was then added dropwise over a 20 minute period. The reaction mixture was then stirred 2 hours and 1.8g dibutyltin dilaurate added. Stirring was continued an additional hour and the product drained from the reactor. The resultant product was a white, opaque, viscous liquid with the following properties:

| | |
|---|---|
| Hydroxyl no., mg KOH/g | 37.1 |
| Water, wt% | 0.02 |
| pH in 10:6 i-PrOH-$H_2O$ | 9.5 |
| Viscosity, 25°C, cps | 17750 |
| Moles of active hydrogens / Moles of isocyanate groups | 1.9 |

EXAMPLE V1

Using the procedure of Example V, a polyurea polymer polyol was prepared by reaction of 0.472 kg. TDI with 0.44 kg hydroxyethylpiperazine in the presence of 17.25 kg. THANOL SF-6503 polyol. Dibutyltin dilaurate (1.8g) was used for catalysis. The resultant product had the following properties:

| | |
|---|---|
| Hydroxyl no., mg KOH/g | 28.9 |
| Water, wt% | 0.11 |
| pH in 10:6 i-PrOH-$H_2O$ | 10.0 |
| Viscosity, 25°C, cps | 10300 |
| $\frac{\text{Moles of active hydrogens}}{\text{Moles of isocyanate groups}}$ | 2.2 |

EXAMPLE VII

Using the procedure of Example V a polyurea polymer polyol was prepared by reaction of 0.39 kg. DIGLYCOLAMINE with 0.52 kg. TDI in the presence of 17.25 kg. THANOL SF-6503 polyol. Dibutyltin dilaurate (1.8g) was used for catalysis. The resultant product had the following properties:

| | |
|---|---|
| Hydroxyl no., mg KOH/g | 27.1 |
| Water, wt% | 0.02 |
| pH in 10:6 i-PrOH-$H_2O$ | 7.0 |
| Viscosity, 25°C, cps | 15700 |
| $\frac{\text{Moles of active hydrogens}}{\text{Moles of isocyanate groups}}$ | 2.5 |

## EXAMPLE VIII

This Example will illustrate the utility of the polyurea polymer polyols of this invention in the preparation of flexible urethane foams. It will further show that incorporation of 25-50% of the polyurea polymer polyols into the formulation effectively increases the load bearing properties (CLD) of the foam while maintaining good overall properties.

| Foam Number | A | B | C | D |
|---|---|---|---|---|
| Formulation, pbw | | | | |
| THANOL SF-6503 | 100 | 75 | 60 | 50 |
| Polyurea polymer polyol[1] | - | 25 | 40 | 50 |
| Water | 4.0 | 4.0 | 4.0 | 4.0 |
| Q2-5043 silicone[2] | 1.5 | 1.5 | 1.5 | 1.5 |
| L-6202 silicone[3] | 0.5 | 0.5 | 0.5 | 0.5 |
| THANCAT TD-33[4] | 0.3 | 0.3 | 0.3 | 0.3 |
| Stannous octoate[5] | 0.3 | 0.3 | 0.4 | 0.5 |
| Toluene diisocyanate | 44.8 | 46.5 | 45.95 | 48.1 |
| NCO/OH ratio | 1.05 | 1.07 | 1.05 | 1.05 |
| Details of preparation | | | | |
| Cream time, sec. | 10 | 10 | 10 | 10 |
| Rise time, sec. | 100 | 118 | 109 | 99 |
| Properties | | | | |
| Density, $kg/m^3$ | 29.16 | 30.44 | 27.87 | 27.71 |
| Tensile, $kg/m^2$ | 12550 | 16170 | 10475 | 9420 |
| Elongation, % | 199 | 217 | 148 | 125 |
| Tear, kg/cm | 0.571 | 0.732 | 0.375 | 0.357 |
| Compression set, 50% | 7.6 | 11.8 | 9.9 | 14.8 |
| 90% | 8.6 | 19.5 | 39.4 | 60.0 |
| CLD, 50% - $kg/m^2$ | 370 | 590 | 555 | 605 |

[1]Hydroxyl no. 43.8; prepared by reaction of 0.34 kg. TDI with 0.36 kg. hydroxyethylpiperazine in the presence of 17.43 kg. THANOL SF-6503 polyol.

[2]Dow Corning Corp.

[3]Union Carbide Chemical Corp.

[4]Texaco Chemical Co.; 33% triethylenediamine in propylene glycol

[5]Thermolite T-10; Metal and Thermit Corp.

EXAMPLE IX

This Example will illustrate the use of the polyurea polymer polyols of this invention in the preparation of high resilience (HR) foam. It will further show that incorporation of 40% of the polyurea polymer polyols into the formulation effectively increases the tensile, tear, elongation and CLD of the resultant foams.

| Foam Number | A | B | C | D |
|---|---|---|---|---|
| Formulation, pbw | | | | |
| THANOL SF-5505 | 100 | – | – | 60 |
| THANOL SF-6503 | – | 100 | 60 | – |
| Polyurea polymer polyol[1] | – | – | 40 | 40 |
| Water | 3.8 | 3.8 | 3.8 | 3.8 |
| Q2-5043 silicone[2] | 2.0 | 2.0 | 2.0 | 2.0 |
| THANCAT TD-33[3] | 0.25 | 0.25 | 0,25 | 0.25 |
| NIAX A-1[4] | 0.25 | 0.25 | 0.25 | 0.25 |
| THANCAT DM-70[5] | 0.25 | 0.25 | 0.25 | 0.25 |
| Dibutyltin dilaurate[6] | 0.01 | 0.01 | – | – |
| 80/20 TDl/PAPI[7] | 46.4 | 45.1 | 45.8 | 46.7 |
| NCO/OH ratio | 1.02 | 1.02 | 1.02 | 1.02 |
| Details of preparation | | | | |
| Cream time, sec. | 8 | 8 | 8 | 8 |
| Rise time, sec. | 115 | 110 | 115 | 110 |
| Gel time, sec. | 240 | 225 | 225 | 210 |
| Postcure, °C(hr) | 100-105 (0.5) | 100-105 (0.5) | 100-105 (0.5) | 100-105 (0.5) |
| Properties | | | | |
| Density, $kg/m^3$ | 29.00 | Foam | 28.36 | 29.48 |
| Tensile, $kg/m^2$ | 5625 | shrunk, | 8860 | 705 |
| Elongation, % | 105 | dis-carded | 138 | 118 |

| | | | |
|---|---|---|---|
| Tear, kg/cm | 0.196 | 0.268 | 0.232 |
| Compression set, 50% | 14.5 | 58.9 | 29.0 |
| , 75% | 12.3 | 77 | 25.0 |
| CLD, 50% $kg/m^2$ | 205 | 225 | 240 |

[1] As in Example 5; hydroxyl no. 371.

[2] Dow-Corning Co.

[3] 33% triethylenediamine in propylene glycol; Texaco Chemical Co.

[4] Bis(dimethylaminoethyl)ether; Union Carbide Chemical Corp.

[5] 70% dimorpholinodiethylether 30% dimethylpiperazine; Texaco Chemical Co.

[6] Thermolite T-12; Metal and Thermit Corp.

[7] Eq. wt. 94.3 for the mixture. PAPI is a 2.7 functionality polymeric isocyanate. Product of the Upjohn Company.

EXAMPLE X

This Example will illustrate the use of the polyurea polymer polyols of this invention in the preparation of high resilience foam (C). It will further show that foams prepared using the polyurea polymer polyols of this invention have improved properties as compared to those made from prior art formulations (A and B).

| Foam Number | A | B | C |
|---|---|---|---|
| Formulation, pbw | | | |
| THANOL SF-6503 | 99 | – | 60 |
| THANOL SF-5505 | – | 99 | – |
| HEP[1] | 1 | 1 | – |
| HEP/TDI/SF-6503 polyurea polymer polyol[2] | – | – | 40 |
| Water | 3.8 | 3.8 | 3.8 |
| Q2-5043 silicone[3] | 2.0 | 2.0 | 2.0 |
| THANCAT TD-33[4] | 0.25 | 0.25 | 0.25 |
| THANCAT DM-70[5] | 0.25 | 0.25 | 0.25 |
| NIAX A-1[6] | 0.25 | 0.25 | 0.25 |
| Dibutyltin dilaurate | 0.013 | 0.013 | 0.013 |
| 80/20 TDI/PAPI[7] | 46.5 | 47.9 | 45.3 |
| NCO/OH | 1.02 | 1.02 | 1.02 |
| Details of preparation | | | |
| Cream time, sec. | 6-7 | 6-7 | 7 |
| Rise time, sec. | 80 | 92 | 100 |
| Gel time, sec. | 225 | 270 | 255 |
| Postcure, °C (hr.) | 100(0.5) | 100(0.5) | 100(0.5) |
| Foam appearance | Foam shrunk badly | Foam had large coarse cells | Foam had small uniform cells |

| | | | |
|---|---|---|---|
| Density, $kg/m^3$ | - | 38.13 | 32.04 |
| Tensile, $kg/m^2$ | - | 7665 | 10125 |
| Elongation, % | - | 102 | 150 |
| Tear, kg/cm | - | 0.239 | 0.341 |
| Compression set, 50% | - | 19.1 | 40.8 |
| , 75% | - | 20.2 | 75.1 |
| CLD, 50%, $kg/m^2$ | - | 205 | 250 |

[1]Hydroxyethylpiperazine

[2]Hydroxyl no. 28-29, prepared to contain 2.4% combined HEP

[3]Dow-Corning Corp.

[4]33% triethylenediamine in propylene glycol

[5]70% dimorpholinodiethyl ether, 30% dimethylpiperazine; Texaco Chemical Co.

[6]bis(dimethylaminoethyl)ether; Union Carbide Chemical Corp.

[7]Eq. wt. 94.3

## EXAMPLE XI

This Example further illustrates the use of the polyurea polymer polyols of this invention in the preparation of superior high resilience foams (B, D) as compared to those based on prior art formulations (A, C).

| Foam Number | A | B | C | D |
|---|---|---|---|---|
| Formulation, pbw | | | | |
| THANOL SF-6503 | 98.6 | 60 | - | - |
| THANOL SF-5505 | - | - | 98.6 | 60 |
| MEA[1] | 1.4 | - | 1.4 | - |
| MEA/TDI/THANOL SF-6503 polyurea polymer polyol[2] | - | 40 | - | 40 |
| Water | 3.8 | 3.8 | 3.8 | 3.8 |
| Q2-5043 silicone | 2.0 | 2.0 | 2.0 | 2.0 |
| THANCAT TD-33 | 0.25 | 0.25 | 0.25 | 0.25 |
| THANCAT DM-70 | 0.25 | 0.25 | 0.25 | 0.25 |
| NIAX A-1 | 0.25 | 0.25 | 0.25 | 0.25 |
| Dibutyltin dilaurate | 0.013 | 0.013 | 0.013 | 0.013 |
| 80/20 TDI/PAPI | 49.4 | 46.7 | 50.8 | 46.5 |
| NCO/OH | 1.02 | 1.02 | 1.02 | 1.02 |
| Details | | | | |
| Cream time, sec. | 6 | 8 | 5 | 8 |
| Rise time, sec. | 92 | 110 | Too fast to handle | 110 |
| Gel time, sec. | 255 | 255 | | 225 |
| Post cure, °C(hr.) | 100(0.5) | 100(0.5) | | |
| Results | Foam had large coarse cells | Foam had small uniform cells | | Foam had small uniform cells |

[1]Monoethanolamine

[2]Lot 5215-41, hydroxyl no. 35.3 mg KOH/g, contains 1.4% combined MEA.

EXAMPLE XII

Into a two-liter three-necked flask equipped with a thermometer, stirrer, dropping funnel, water condenser and nitrogen source was charged 950g THANOL SF-5505 (32-36 hydroxyl no. ethylene oxide-capped glycerin-based polyol; Jefferson Chemical Co.), and 18.5g (0.285 eq.) hydroxyethylpiperazine. Toluene diisocyanate (31.5g, 0.362 eq.) was then added dropwise over a fifteen minute period. The temperature of the reaction mixture rose from 22-33°C during this period. After a two-hour digestion period, the reaction was quenched with 9.95g dibutylamine. The resultant product was a white, opaque viscous liquid which had the following properties:

| | |
|---|---|
| Hydroxyl no., mg KOH/g | 35.9 |
| Water, wt. % | 0.05 |
| pH in 10:6 isopropanol-water | 9.0 |
| Total amine, meq/g | 0.145 |
| Viscosity, | |
| 25°C., cps (days) | 2180 (1) |
| | 4100 (14) |
| | 5100 (39) |
| | 5660 (77) |
| | 5000 (104) |
| | 4000 (139) |
| Appearance | Homogeneous throughout storage. |

## EXAMPLE XIII

This Example will illustrate the preparation of polyurea polymer polyols by reaction of hydroxyethylpiperazine and toluene diisocyanate in the presence of THANOL SF-5505 polyol. It will further show the improved storage stability of dibutylamine-quenched products as compared to those prepared in its absence.

Into a 40 litre reactor were charged 17.25 kg THANOL SF-5505 and 0.44 kg hydroxyethylpiperazine. The reactor was then evacuated and purged with prepurified nitrogen. Toluene diisocyanate (0.47 kg) was then added through a bottom feed line over a twenty minute period. The reaction temperature peaked at 35°C. After a three hour digestion period, the reaction was quenched with 45.4g dibutylamine. The product was a white, opaque viscous liquid with the following properties. For comparison, properties of a product prepared without using dibutylamine quenching agent are included.

| Run Number | A | B |
|---|---|---|
| Charge | | |
| THANOL SF-5505, kg. | 17.25 | 17.25 |
| Hydroxyethylpiperazine, kg. | 0.44 | 0.44 |
| Toluene diisocyanate, kg. | 0.47 | 0.47 |
| Dibutylamine, g. | 45.4 | -- |
| Properties | | |
| Hydroxyl no., mg KOH/g | 43 | 36.3 |
| Water, wt. % | 0.05 | 0.04 |
| pH in 10:6 isopropanol-water | 11.4 | 9.8 |
| Viscosity, 25°C., cps, (days) | 2500 (7) | 4060 (1) |
| | 2500 (49) | 3940 (37) |
| | 2300 (61) | 4760 (169) |
| | 2300 (112) | |

## EXAMPLE XIV

This Example will illustrate the preparation of a polyurea polymer polyol by reaction of 1-amino-2-propanol and toluene diisocyanate in the presence of THANOL SF-6503 polyol (26-28 hydroxyl no. ethylene oxide-capped glycerin-based polyol; Jefferson Chemical Co.). It will further show the improved storage stability of a dibutylamine-stabilized product as compared to material made in its absence.

Into a 40 litre reactor were charged 17.25 kg THANOL SF-6503 and 0.318 kg 1-amino-2-propanol. The reactor was then evacuated and purged with prepurified nitrogen. Toluene diisocyanate (0.59 kg) was then added through a bottom feed line over a thirty minute period. The reaction mixture was then digested two hours. The reaction temperature peaked at 33°C during the digestion period. After digestion, 9.08 kg of product was drained from the reactor. To the remaining material in the reactor (9.08 kg) was added 22.7g dibutylamine. The products were white, opaque viscous liquids which had the following properties:

| Run No. | A | B |
|---|---|---|
| Dibutylamine added | no | yes |
| Properties | | |
| Hydroxyl no., meq KOH/g | 36.4 | 35.3 |
| Water, wt. % | 0.05 | 0.04 |
| pH in 10:6 isopropanol-water | 6.4 | 6.5 |
| Viscosity, 25°C., cps (days) | 4800 (1) | 4900 (1) |
| | 10700 (7) | 8750 (7) |
| | 20800 (41) | 12700 (41) |

## EXAMPLE XV

This Example will illustrate the effectiveness of the dibutylamine stabilized polyols of this invention in the preparation of HR foam. It will further show that although foam can be prepared from nonstabilized products the foaming mixture was of higher viscosity. This might result in poor flowability in a molding operation. Formulations and details of preparation are given in the following Table.

| Foam No. | A | B | C | D |
|---|---|---|---|---|
| Formulation, pbw | | | | |
| THANOL SF-6503-HEP-TDI polyurea polymer polyol | - | - | 40[c] | 40[d] |
| THANOL SF-5505-HEP-TDI polyurea polymer polyol | 40[a] | 40[b] | - | - |
| THANOL SF-5505 | 60 | 60 | 60 | 60 |
| Water | 3.8 | 3.8 | 3.8 | 3.8 |
| Q2-5043 silicone | 2.0 | 2.0 | 2.0 | 2.0 |
| THANCAT TD-33 | 0.25 | 0.25 | 0.25 | 0.25 |
| THANCAT DM-70 | 0.25 | 0.25 | 0.25 | 0.25 |
| NIAX A-1 | 0.25 | 0.25 | 0.25 | 0.25 |
| Dibutyltin dilaurate | 0.013 | 0.013 | 0.013 | 0.013 |
| 80/20 TDI/PAPI | 47 | 46.9 | 46.5 | 46.6 |
| NCO/OH | 1.02 | 1.02 | 1.02 | 1.02 |
| Details of preparation | | | | |
| Cream time, sec. | 7 | 7 | 7 | 7 |
| Rise time, sec. | .05 | 110 | 110 | 110 |
| Gel time, sec. | 210 | 240 | 240 | 225 |
| Foam appearance | good foam, fine cells | good foam, fine cells | good foam, fine cells | good foam, foaming mixture did not flow well because of high viscosity |

[a]stabilized with 0.25% dibutylamine; hydroxyl no., mg KOH/g 42.2, viscosity, 25°C (87 days), cps 2330

[b]not stabilized, hydroxyl no., mg KOH/g 40.4, viscosity, 25°C (87 days), cps 2880

[c]stabilized with 0.25% dibutylamine, hydroxyl no., mg KOH/g 35.3, viscosity, 25°C (129 days) cps 10680

[d]not stabilized, hydroxyl no., mg KOH/g 36.4, viscosity, 25°C (129 days), cps 17900

CLAIMS:

1. A polyurea polymer polyol characterized in that it is the reaction of a hydroxyl-containing amine, a polyether polyol having a molecular weight of 2000 to 8000, and an organic polyisocyanate, the molar ratio of hydroxyl containing amine to polyether polyol being from 0.5:1 to 3.5:1, and the molar ratio of active hydrogen to isocyanate groups being from 1.4:1 to 3.5:1.

2. A polyurea polymer polyol according to Claim 1 characterized in that the hydroxyl-containing amine is monoethanolamine, diethanolamine, 2-(2-aminoethoxy-ethanol), hydroxyethylpiperazine, N-methylethanolamine, 2-hydroxyethyl ethylene diamine or 1-amino-2-propanol.

3. A polyurea polymer polyol according to Claim 1 or 2 characterized in that it is stabilized by adding a secondary amine.

4. A polyurea polymer polyol according to Claim 3 characterized in that the secondary amine is employed in an amount of up to 2.0 weight %, based on reactants.

5. A polyurea polymer polyol according to Claim 4 characterized in that the amount of secondary amine is from 0.1 to 1.0 weight %.

6. A polyurea polymer polyol according to any of Claims 3 to 5 characterized in that the secondary amine has the formula

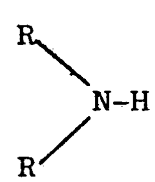

where R is $C_1$ to $C_8$ alkyl.

7. A polyurea polymer polyol according to any of Claims 3 to 6 characterized in that the secondary amine is dibutylamine or morpholine.

8. A method for producing a polyurethane by reacting a hydroxyl-containing compound with an organic polyisocyanate characterized in that the hydroxyl-containing compound is polyurea polymer polyol according to any of Claims 1 to 7.

9. A method according to Claim 8 characterized in that the polyurea polymer polyol is reacted with the organic polyisocyanate in the presence of another polyether polyol.

0044174

European Patent Office

# EUROPEAN SEARCH REPORT

EP 81 30 3011.1

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| X | DE - C - 1 078 321 (FARBENFABRIKEN BAYER AG)<br>* page 1, column 2, line 51 to page 3, column 5, line 8; example 1 *<br>-- | 1,2,8 | C 08 G 18/10<br>C 08 G 18/32<br>C 08 G 18/66<br>C 08 L 75/02<br>C 08 L 75/04 |
| | DE - A - 1 803 467 (E.I. DU PONT DE NEMOURS AND CO.)<br>* claim 1 *<br>-- | 2 | |
| | US - A - 4 172 192 (W. H. COOK)<br>* claims 1, 6, 10, 12, 18, 22 *<br>-- | 3-5,7 | TECHNICAL FIELDS SEARCHED (Int. Cl.3) |
| | Chemical Abstracts vol. 67, no. 12, 18 September 1967<br>Columbus, Ohio, USA<br>WYANDOTTE CHEMICALS CORP. "Cast polyurethane films"<br>page 5169, column 1, abstract no. 54774g<br>& NL - A - 6 611 556<br>---- | 7 | C 08 G 18/10<br>C 08 G 18/28<br>C 08 G 18/32<br>C 08 G 18/66<br>C 08 L 75/02<br>C 08 L 75/04 |
| | | | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| Berlin | 06-10-1981 | IDEZ |

EPO Form 1503.1 06.78